# EUROPEAN PATENT SPECIFICATION

(11) **EP 3 139 066 B1**
(45) Date of publication and mention of the grant of the patent: **12.12.2018**
(21) Application number: 16386012.5
(22) Date of filing: 01.08.2016
(51) Int. Cl.: F16H 21/36

(54) **A CONVERTER OF DYNAMIC TO ROTATIONAL MOTION OF A CHAINED PUSHROD**
WANDLER VON DYNAMISCHER ZU ROTIERENDER BEWEGUNG EINER VERKETTETEN SCHUBSTANGE
CONVERTISSEUR DE MOUVEMENT ROTATIF DYNAMIQUE D'UN POUSSOIR EN CHAÎNE

(30) Priority: 31.08.2015 GR 20150100380
(43) Date of publication of application: 08.03.2017
(73) Proprietor: Mastrokalos, Antonios, 84003 Sifnos (GR)
(72) Inventor: Mastrokalos, Antonios, 84003 Sifnos (GR)

(56) References cited:
- EP-A1- 2 520 482
- WO-A2-2010/105278
- GB-A- 1 105 349
- US-A- 3 805 627

## Description

The invention relates to a reciprocal engine, which requires only dynamic energy for its operation, and converts it to rotational kinetic energy.

The various types of engines have been invented in the past, such as the heat engines and fuel cell engines, for the conversion of chemical energy to kinetic, which operate stably but cause high thermal unexploited losses, thereby contributing to the greenhouse effect. On the other side, the exploitation of nuclear reactors present various risks with enormous impacts, making these potentially dangerous for the environment and mankind. Additionally, the combinations exploiting renewable energy sources do not provide solutions capable to cover the energy demands, since they do not provide a permanent energy supply.

Based on the first law of thermodynamics, an engine is provided below, which operates autonomously, ecologically, by converting dynamic energy toe rotational energy, obviating all the said undesirable impacts.

Until now, all reciprocal engines operate in the presence of a force on the journal of the crankshaft, which force cannot be applied throughout the rotation period. Known from the state of the art is WO 2010/105278 presenting systems for transmitting drive force, with the use of crankshaft and chain wheels. On the contrary, in the engines presented here, the application of force on their journals is continuous and uninterrupted, throughout the rotation, always keeping the same rotation direction.

The operation of the engines of this kind, converting dynamic energy to rotational energy, is achieved by the use and coupling via the chain of two chain wheels, one chain wheel being fixed on the axle of the turning journal of the crankshaft, by a chain wheel of the same type, which is fixed on the housing or body of the engine, but has the same center with that of the crankshaft. In this way, the displacement of the chain in relation to the two chain wheels is performed at the same speed, and while the central one remains fixed, without turning, the chain wheel of the journal turns opposite to the rotation direction of the crankshaft. As a result the body of the large lever horizontally, where at its end the force to be transformed is applied. Therefore, this arm is called push rod. The point of application of the resistance or load of the engine is of course the crankshaft, while the fulcrum is located on its turning journal, with the sides constituting the length of the fulcrum arm, for the system of lever arms and point of applied resistance, of this engine. The push rod on the specific model, since it body out of the rotational oscillation, defined by the rotation of the journal of the crankshaft, is displaced as a whole to the position of 0, at the position of 180 degrees and from the 180 to 0 or 360 degrees, parallel and with a horizontal position. In order to achieve a way so that its end, on which a convertible force is applied, reciprocates on a straight line, where a force of desired intensity is applied, and no need for handling this derived intensity difference in various ways, so that the produced power and rotational speed is better controlled, it does not constitute a single rigid body, but at a point of its length, a joint is arranged, supplied with a return spring, which may be a dual one, so that the other end is capable to span over an angle on both sides of the central longitudinal line. For better facilitation, this part of the push rod, which is after the joint, may be configures as two parts, coaxial between them, so that the point of application of the convertible force, remains at a point, so that the mechanisms of serving the applied convertible force are as simpler as possible.

Compared to the thermal reciprocal engines, which provide useful energy per rotation and depending on the thermodynamic type of operation, by minimal degrees during the combustion-expansion phase and only, while they have lost energy during the necessary phases of compression and air scanning-gas exhaustion, plus the cooling losses, the energy converter disclosed here continuously operate with almost the same intensity and for 360 degrees.

It is recommended to apply a motion stop, especially for the engines of which the crankshaft consists only of one journal, to prevent rocking and an undesirable rotation direction, if the crankshaft is at 0 or 360 degrees, during starting. Respectively, such a problem is not present in the case of engines with crankshafts having more journals. If however an engine is equipped with two motion stops in series on the same axle, with the capability to select braking of each one of them, then the reversion of the engine is achieved, without other additional interventions-additions. Thus, for propulsion engines of vessels and especially vehicles, where the reversion is necessary and achieved in this way, no control box for the output revolutions of the unit are necessary.

The said engines may serve a plurality of needs and power demands, ranging from milliwatts to thousand of kilowatts, while there are not subjected to any climate limitation, or height level. For example, an electric-power producing set of engine-generator, of a size of a battery of each portable and, not only, electronic-electric device, replaces fully that, obviating the need for wires, chargers and batteries. They present no problem of orientation of the fixation base, while they can operate under air vacuum, pressurized or is space. They operate under toxic or volatile gases, are free from fuel supply networks and there is no danger of clogging of lubrication filters, since the oils are not subjected to pollutants. From all the above it is concluded that they are suitable for remote control, without needing human presence for inspection.

Thus, based on the above-mentioned mode of operation of the engine of this type, the total length of the push rod, i.e. of the part of the level arm between the journal of the main crankshaft, where the fulcrum of the system and the small part of this system, i.e. of the sides of the same crankshaft, where the resistance and in particular the load of the engine is applied, is significantly larger. Then, by the application of a force of even a small intensity on the other end of the pushrod, all friction forces and resistance can be obviated and motion may start. If this application of force continues, then the motion will become rotational, the larger it is, the higher will be the rotation speed and the developed power of engine.

Since the dynamic magnitudes, of the side of the pushrod where the operation force to be converted is applied, are controllable and easily variable, so that the control of the rotational speed and torque-power is precise, then correspondingly they will either exceed the also variable, dynamic ones of the other side where the load or resistance is applied, which an engine has to handle, thereby keeping a smooth rotational motion. If this is not desirable, the dynamic magnitudes, of both sides or areas, may be made equal and bring the engine to a stop. Respectively, from the rest position, in an corresponding but opposite way, an imbalance or disturbance may be caused, by applying such a conversion, at the end of the pushrod and the operation of the engine starts.

These and other features and the ecological advantages from the operation of the engine, as well as the full independence from each energy need, are presented below in the following detailed description. The invention will be fully understood with reference to the accompanying figures, which depict an exemplary embodiment thereof.

The unique features regarding the construction of engines converting dynamic to kinetic rotational motion, of the reciprocal type, with the use of a chain, which ties the two chain wheels, one of which is fixed, without being rotated on the center of the crankshaft, and the other on the journal of the crankshaft, turning this opposite to the direction of the crankshaft, are presented, providing details of the relevant figures in series.

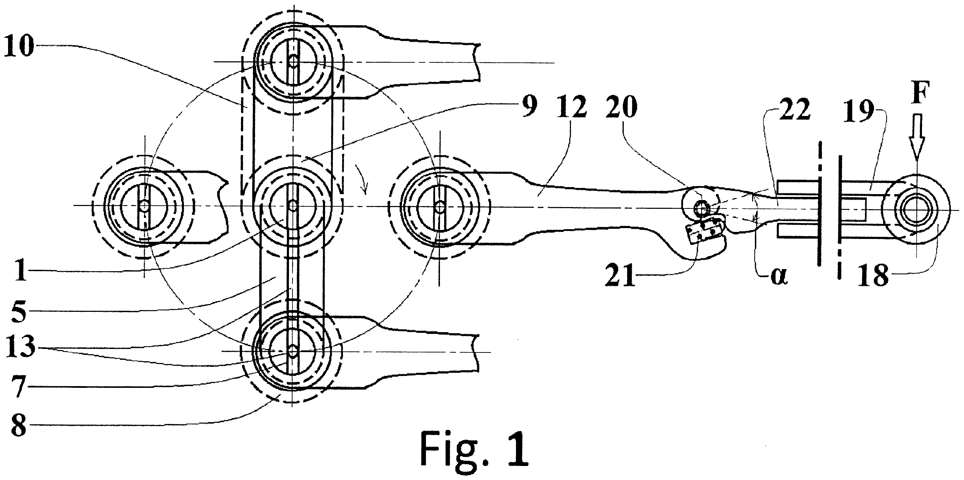

Figure 1 shows in front view, the collapsible pushrod, the crankshaft and its journal, throughout the motion. In this figure, it is shown the orientation of the pushrod in relation to the chain wheel of its journal and the central chain wheel, being fixed and located at the center of the engine-crankshaft, and coupled between them, at four successive positions of operation.

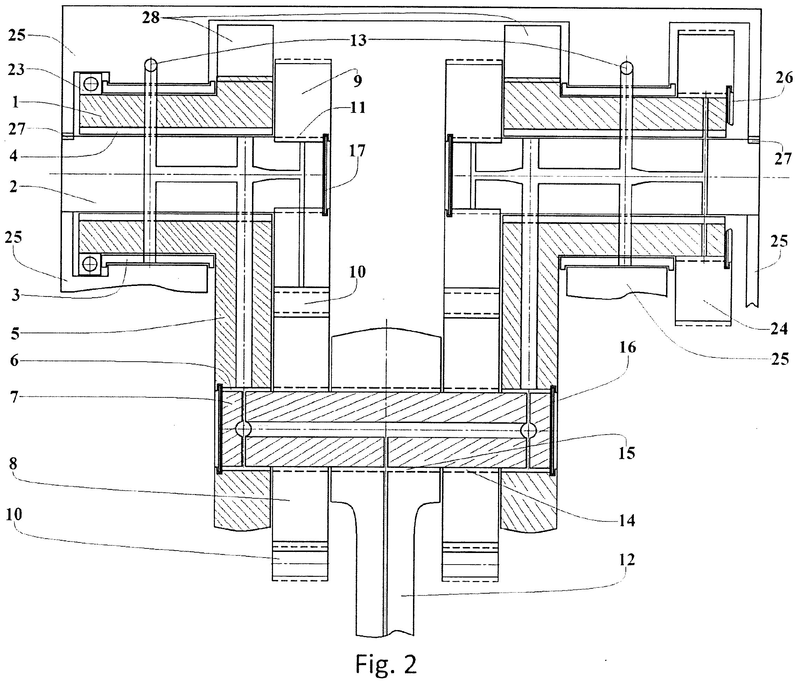

Figure 2 shows in plan view all the elements of the engine, having a crankshaft with an inner circular opening, the element of stable retention of the central chain wheel, while the position of the turning chain wheel above the journal is shown. The fixation of both the pushrod and the chain wheels with spline shafts and circular locks is shown. Finally, a motion stop, preventing any undesirable direction of rotation. It should be noted that a crankshaft with more than one journal may be provided, depending on the number, the power demands etc.

With reference to these figures, a preferred embodiment will be described.

Figure 1 shows an integrated proposed device for exploiting dynamic to rotational motion, by the use of a reciprocal engine of the present invention. It shows in front view the way by which the body of the pushrod (12), at the end of which a force (F) is applied, to be converted to rotational motion, executes the following motions simultaneously. Its left end which it is tied on the journal of the crank shaft (7) until the point of its joint (20) moves circularly, while it remains permanently on a horizontal orientation or position. This is achieved by tying the journal (7), via its chain wheel (8), by the chain (10) with an other chain wheel (9) located exactly at the center of the crankshaft (1), but totally fixed and non-moving on the housing of the engine (25), Fig. 2. Thus, when the crankshaft (1) starts to rotate, it makes the chain wheel of the journal (8), free from controlled rotation, to turn its direction of rotation in relation to that of the crankshaft (1), since it is bound by the chain (10) which is not moving. Since the geometric elements of the two chain wheels are the same, the degrees of the rotation of the crankshaft (1) to the right will be the same to the degrees of the rotation of the chain wheel of the journal (8), falling behind or reversing. The push rod (12), being fixed with a spline shaft (14), as shown in Fig. 2, on the body of the journal (7) is made to follow it, which means that the left body of the collapsible pushrod (12) keeps permanently the same horizontal orientation, irrespective of the position of the crankshaft (1). The remaining part of the pushrod (12), from the joint (20) to the point of application of the convertible force on the roller end of the pushrod (18) respectively, oscillates within a narrow angle range (α), due to the return spring (21), the smaller being the angle the larger being the total length of the part of the pushrod (12) to the roller (18). This also means that the intensity of applied convertible force should be smaller. At the same time, the final end of this with a roller (18) reciprocates linearly, and in particularly with the sharing of this right part end of the pushrod to two coaxial pieces, wherein the one is the end part (22) after the joint (20), and the other is the coaxial length-variation element (19), the roller (18) remains at the same point, allowing the coaxial parts to move producing work. In this way, the direction of the applied convertible force (F) in relation to the body of the coaxial pieces (22) and (19) shifts minimally from the vertical, at the point of its application. The applied rotation stress of the crankshaft (10) is shown by the corresponding arrow, while the pushrod (12) tied from its journal (7), in a manner similar to a pawl, if it receives at its end a value exceeding the friction resistances and the load of the engine, forces this to rotational motion.

Also it is shown that the chain (10) that ties the cooperating chain wheels of the journal (8), a central chain wheel (9) respectively, which forces the turning chain wheel of the journal (8), as mentioned, by each clockwise degree of rotation of the crankshaft, to move this respectively by one degree to the left, however essentially it holds in a permanent horizontal orientation, which is the aim. This figure shows exemplarily the stable horizontal position or orientation of the pushrod (12), in relation to the chain wheel of its journal (8) and the central chain wheel (9), permanently fixed and located at the center of the engine - crankshaft, and coupled between them, at four successive operation positions, 0 degrees, 90 degrees, 180 degrees and 270 degrees, respectively.

Figure 2 shows in plan view the elements of the said engine, which has a crankshaft (1), shown shaded for emphasis, which has an inner circular opening, through which and with its own support bearings (4) the fixation element (2) of the central chain wheel (9) passes, leaving the crankshaft supported externally on its own bearings (3) to turn when appropriate. The figure also shows the position of the turning chain wheel (8) on the journal (7), which by a chain (10) couples with the fixed central chain wheel (9), which in this way holds and guides the turning one to the suitable angular position. It is also apparent the fixation of both the collapsible pushrod (12), by the use of a fixation spline shaft (15) and of the chain wheels with the respective fixation spline shafts, for the central chain wheel (11) and journal chain wheel (14) on their carriers. That is, they are fixed on the journal (7) and the support element of the central chain wheel (2), which by the use of circular locks of the journal (16) and inner chain wheel (17) keep fixed the total shape and form of the crankshaft (1). Also the motion stop (23), preventing during initiation of the operation of the engine an undesirable rotation direction is shown. Thus, the fixation of the central chain wheel (9), by its retention elements (2) thereof and on both sides on the housing or body of the engine (25), with keys (27), is shown and thus the reception of the rotational motion of the engine is effected from the one end of the crankshaft (1) via an motion output gear (24), with side fishbone-shaped teeth, to avoid axial thrusts on the crankshaft (1), which is parallel to the crankshaft (1) and retained on that with the gear circular lock (26). Also the balance counterweights of the crankshaft (28) are shown. It should be noted that in order to have a uniform distribution of the stresses and to avoid monolateral wear, the pair of chain wheels (8), (9) and chain (10) is dual and thus is positioned on both sides of the crankshaft (1) and the journal (7). Thus, since the fixation element of the central chain wheel (2) must be supported on the housing or body of the engine (25), the rotational motion must be received via the motion output gear (24), which is positioned parallel to the crankshaft (1).

No particular mention is made to the classes and kinds of effectors through which the applied force to be converted may be generated, preserved and controlled, since they can be selected from commercially available products.

## Claims

1. A converter of dynamic to rotational motion of a chained pushrod, consisting of a crankshaft (1) with a journal (7) and a central chain wheel (9), having the same center with the crankshaft (1), fixed on a housing (25) connected by a chain (10) to a turning journal chain wheel (8), having the same diameter with the central chain wheel (9), fixed to a collapsible pushrod (12), having an end part (22) on which force is applied, wherein the applied force causes displacement of the pushrod (12) and due to the permanent connection of the journal chain wheel (8) with the central chain wheel (9), via the chain (10), the rotational motion of the crankshaft (1) is caused, wherein the end part (22) is connected by a joint (20) with the pushrod (12) and returns to its position by a return spring (21), having a coaxial element for the variation of the length of the pushrod (12).

## Patentansprüche

1. Ein Wandler von dynamischer zu rotatorischer Bewegung einer verketteten Schubstange bestehend aus einer Kurbelwelle (1) mit einem Zapfen (7) und einem zentralen Kettenrad (9), mit der gleichen Mitte wie die Kurbelwelle (1), befestigt an einem Gehäuse (25), das durch eine Kette (10) mit einem Drehzapfenkettenrad (8) verbunden ist, das den gleichen Durchmesser wie das zentrale Kettenrad (9) aufweist, an einer kollabierbaren Schubstange (12) befestigt, mit einem Endteil (22), auf den eine Kraft ausgeübt wird, wobei die ausgeübte Kraft eine Verschiebung der Schubstange (12) bewirkt und aufgrund der dauerhaften Verbindung des Zapfenkettenrades (8) mit dem zentralen Kettenrad (9), über die Kette (10), die Drehbewegung der Kurbelwelle (1) verursacht wird, wobei das Endteil (22) durch ein Gelenk (20) mit einer Schubstange (12) verbunden ist und durch eine Rückstellfeder (21) die ein koaxiales Element zur Veränderung der Länge der Stößel (12) aufweist, in seine Position zurückkehrt,

## Revendications

1. Convertisseur de mouvement dynamique en mouvement rotatif d'un poussoir à chaîne composé d'un vilebrequin (1) avec un tourillon (7) et une roue à chaîne centrale (9), ayant le même centre que le vilebrequin (1), fixé sur un carter (25) relié par une chaîne (10) à une roue tournante à chaîne (8) de même diamètre avec la roue à chaîne centrale (9), fixée sur un poussoir repliable (12), ayant une partie d'extrémité (22) sur laquelle une force est appliquée, la force appliquée provoquant le déplacement de la tige de poussée (12) et grâce à la liaison permanente de la roue tournante (8) avec la roue à chaîne centrale (9), par le biais de la chaîne (10), le mouvement de rotation du vilebrequin (1) est provoqué, dans lequel la partie d'extrémité (22) est reliée par un joint (20) à un poussoir (12) et revient dans sa position par un ressort de rappel (21) présentant un élément coaxial pour la variation de la longueur du poussoir (12).
